# EUROPEAN PATENT APPLICATION

(11) **EP 2 109 047 A1**
(43) Date of publication of application: **14.10.2009**
(21) Application number: 08386005.6
(22) Date of filing: 07.04.2008
(51) Int. Cl.: G06F 17/30, G06K 9/00

(54) **Video characterization, identification and search system**

(71) Applicant: Global Digital Technologies SA, 48100 Preveza (GR)
(72) Inventor: Doumenis, Grigorios A., 17455 Alimos Athens (GR); Stassinopoulos, George I., 15237 Filothei Athens (GR); Papastefanos, Serafeim, 35007 Phthiotis (GR); Andritsopoulos, Fotis, 17561 Palaio Faliro Athens (GR)
(74) Representative: Barton, Russell Glen

(57) **Abstract**

A method of characterising a video stream comprising one or more pictures, the method comprising the steps of;
partitioning a picture in the video stream, to be characterised, into a plurality of blocks of data;
measuring for one or more blocks of data which of a plurality of distinct encoding techniques has been used to encode the block of data or calculating which of a plurality of distinct encoding techniques is preferred to encode the block of data and storing data dependent on the calculation or measurement in a memory; determining a value for the picture based on a comparison of the number of blocks of data that have been encoded, or have been calculated to be preferred to be encoded using a particular encoding technique in the picture;
determining a characterising value of the video stream based on the one or more values assigned to the pictures that a value has been calculated for.

In particular, the value of a picture is determined by the ratio of the number of intra encoded macroblocks to the total number of macroblocks or to the number of inter encoded macroblocks, preferably expressed in integer percentage points.

## Description

### Technical field

The present invention relates to a method of characterising and identifying a raw or encoded video stream, or subsets of a video stream. In particular, but not exclusively, the invention relates to a method for characterising a video stream and using the characterisation of the video stream to identify identical streams in video repositories.

### Background to the invention

It is known to encode videos or video streams for storage or streaming, in order to reduce the amount of data required to store them or the bandwidth required for their transmission. A video stream comprises several pictures that are shown sequentially and a corresponding audio file. Each picture may be an entire frame or it may be only a single field which may be combined with another field to form a frame forming an image at some instance in time, as is the case for inter-laced video streams. In this specification the terms picture and frame will be both used and are often interchangeable. Techniques to encode a video are well known and this invention is applicable to many of these techniques, specifically the H.264/AVC standard, which uses a combination of image compression and motion based estimation techniques to encode a video.

Each individual picture in an encoded video stream is divided into typically equal sized macroblocks. A macroblock is a group of neighbouring pixels, typically in a sixteen by sixteen square though other sizes of macroblocks are used. The macroblocks are the standard blocks of data which are encoded and create the picture. A macroblock generally contains Y, Cb and Cr components which are the luma (brightness) and chroma (blue and red) respectively. Macroblocks may be grouped into slices, which are numbered sequences of macroblocks to be processed in sequential order during a raster scan when rendering a picture onto a display. In the known video compression standards, the luma and chroma components may be encoded either spatially or temporally.

Intra-frame encoding in the known H.264/AVC standard, is a form of spatial compression, but in other standards, such as MPEG-4, intra-frame encoding is conducted in a transform domain. In intra-frame encoding the data in a H.264/AVC standard macroblock is compressed by referring to the information contained in the previously-coded macroblocks to the left and/or above said macroblock in the same frame. The information in the encoded macroblock is derived from spatially neighbouring data points and works especially well for pictures which contain smooth surfaces. Slices or macroblocks which are encoded using intra-frame encoding are known as "I" slices or I macroblocks. The intra-frame encoding technique relies only on data contained in that particular frame, and known encoders will often encode entire frames using intra-frame encoding. These frames can be used as reference frames.

Inter-frame encoding in the H.264/AVC standard is a temporal, motion based form of compression, which is encoded with reference to a reference frame. Slices of macroblocks that contain inter-frame prediction are known as "P" slices or P macroblocks. The inter-frame encoding is a form of motion-compensated prediction, which contains the predictive information of displacing a macroblock from the reference frame/ picture with a translational motion vector to describe the motion of the block and a picture reference index. Inter-frame encoding typically requires less bits per macroblock than intra frame encoding.

If a macroblock is identical to the corresponding macroblock in a reference frame, the encoder will refer to the reference frame and will "skip" the encoding of that particular macroblock. Such macroblocks are S or skipped macroblocks.

Video compression techniques involve a combination of these, and sometimes other, techniques to optimally compress the data with the loss of as little information as possible.

It is known to attempt to characterise media by assigning a "fingerprint" to describe the data. This fingerprint can then be compared to a list of previously characterised sets of data for a match to be found. Such a system is particularly developed in audio media, where in the case of an audio track library such as the iTunes (RTM) library an album is characterised by a fingerprint based on the number of files, length of recording and silence between songs, which is then compared to a known library to identify the album. Other known means of identifying video content such as DVDs involves the use of metadata, which stores the details of the media and is read when a DVD is accessed,. Both systems however, are only able to identify the contents of an entire disc or album.

With the increase in digital piracy and unauthorised copies it is desirable to be able to identify content that may be protected by Digital Rights Management (DRM). It is desirable for the owners of the material to be able to locate any material protected by DRM in such large repositories as YouTube (RTM). With multiple copies of a media file being made, altered and renamed it is also possible to have unnecessary duplication of content without knowing that the content is the same. This causes waste of storage space in hard disks or multiple nearly identical videos to be presented to a user searching though a video library. Advertisers may also want to check that advertisements that have been paid to be transmitted as part of a video stream were actually transmitted without assigning to persons the task of watching these streams.

To identify content it is known to determine a "fingerprint" for a video stream. For example Thomson licensing WO/2007/080133 discloses the use of a visual hash function to determine a fingerprint for key frames of the video to characterise the content, which works on the raw un-encoded video. St Andrews WO/2006/059053 discloses the use of motion based fingerprinting by comparing the luminescence of pixels between frames as an estimate of the amount of motion per frame. This technique involves converting each frame to a grey-scale and calculating the luminescence of each macroblock. Both techniques produce different results when the source image has been altered during replication involving e.g. a change in brightness, resolution, size of macroblock, and are computationally expensive to implement and therefore unsuitable for use on a large scale.

There is currently no satisfactory way for quickly and accurately characterising video streams in either raw or encoded formats that remains robust when the parameters of the stream have been altered.

### Summary to the invention

To address at least some of these and other related problems in the prior art, the following invention provides a method of characterising and identifying raw or encoded video streams quickly and accurately as set out in Claim 1. The fingerprint returned by the method is also less susceptible to changes in the parameters of the video stream such as resolution, quality, brightness etc, than previously disclosed inventions.

The invention is preferably able to identify quickly and accurately video content from large video repositories by comparing the fingerprint produced for the input stream to the fingerprint of previously characterised content. For instance the invention may be used as a method for identifying copyrighted material that has been posted on a video sharing website such as YouTube (RTM). In other embodiments, the invention may be used to identify duplicate files on such a site, where identification of material is often done nowadays by metadata or user inputted tags, which are expensive to produce and may not accurately describe the content. Embodiment of the invention can identify adverts in a video stream. By inputting and characterising known adverts in the database these can be identified in a stream. It would be immediately apparent to the person skilled in the art, that the invention is not limited to these embodiments which are shown only by way of example.

According to an aspect of the invention there is provided, a method of characterising a video stream comprising one or more pictures, the method comprising the steps of; partitioning a picture in the video stream, to be characterised, into a plurality of blocks of data; measuring for one or more blocks of data which of a plurality of distinct encoding techniques has been used to encode the block of data or calculating which of a plurality of distinct encoding techniques is preferred to encode the block of data and storing data dependent on the measurement or calculation in a memory; determining a value for the picture based on the number of blocks of data that have been encoded, or have been calculated to be preferred to be encoded using a particular encoding technique; determining a characterising fingerprint of the video stream based on the one or more values assigned to each picture of the video stream that a value has been determined for.

A further aspect of the invention is to provide, a method of characterising a video stream as described above, where the characterising value of a picture or a frame in the stream is determined by the ratio of the number of macroblocks encoded, or calculated to be preferred to be encoded, by a particular technique, preferably a combination of techniques, to the total number of macroblocks or to the number of macroblocks encoded, or calculated to be preferred to be encoded, by a different technique, preferably a different combination of techniques. Preferably the characterising value represents the ratio of the number of intra encoded macroblocks to the total number of macroblocks, whereby the said ratio may be expressed in integer percentage points,.

Preferably the value for a single picture is expressed as one of a alphanumeric character, numerical, hexadecimal, binary.

Preferably the pictures each comprise a frame of a video.

Preferably the video stream is encoded using the H.264/AVC video coding standard.

Preferably the fingerprint to characterise the video stream is written to some form of writeable memory.

Preferably the characterising value/fingerprint of a video stream is compared to other values by a difference of squares method, and preferably a fit assigned.

Further aspects, features and advantages of the present invention will be apparent from the following description and appended claims.

### Brief description of the drawings

Figure 1 is an illustrative representation of a single frame that has been encoded,
Figure 2 is a flow chart of the process of characterising a raw or transcoded single picture in a video stream,
Figure 3 is a flow chart of the process of characterising an encoded single picture in a video stream,
Figure 4 is a flow chart of the process of characterising part, or the whole of a video stream,
Figure 5 is an example of several frames that form a video stream and the fingerprint determined from the stream,
Figure 6 is an example of a generated fingerprint of a video stream,
Figure 7 is a comparison of two characterised video streams that are different,
Figure 8 is an example of two characterised video streams, one of which is approximately a subset of the other which has been encoded using different parameters,
Figure 9 is a flow chart of the process of characterising a video stream and searching for a match amongst known streams, and
Figure 10 is a schematic of the architecture an embodiment of the invention

### Description of the embodiment

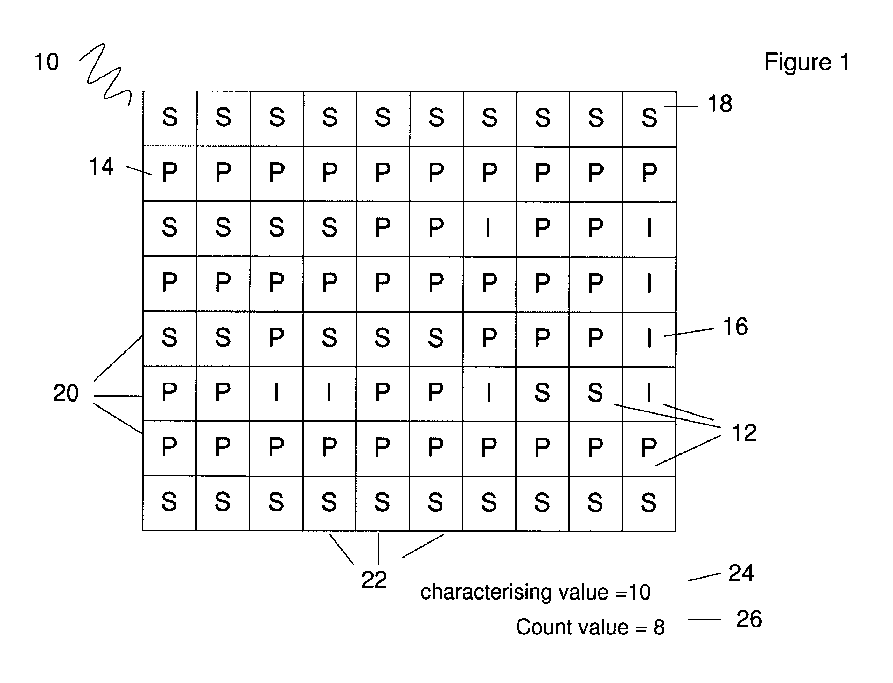

Figure 1 shows an example of a single frame 10 that has been encoded with both spatial and temporal techniques. In the preferred embodiment the program characterises the individual frames, rather than the pictures to characterise a video stream 30. Other embodiments of the invention characterise the individual pictures and/or frames and/or fields to characterise the video stream 30 and use other encoding techniques.

As is shown the frame 10, is divided into eighty macroblocks 12. There are three different types of macroblocks, P macroblocks 14, which are inter-frame prediction encoded macroblocks, I macroblocks 16, which are spatially encoded intra-frame macroblocks and S blocks 18, which are skipped macroblocks that are identical to the macroblocks in a reference frame, the characterising value 24 and the count value 26.

The macroblocks 12 are arranged in rows 20 and columns 22. An estimate of the amount of motion in a single frame 10 can be determined from the number of macroblocks 12 of a specific type. The estimate of the motion for the frame is expressed as a charactering value 24. In a preferred embodiment the estimate of motion is based on the number of I macroblocks 16 in the single frame 10. The measure of the number of macroblocks 12 of a specific type is the count value 26.

In Figure 1 there are eighty macroblocks 12, of which eight are intra-frame I macroblocks 16, therefore the count value 26 is eight. In a preferred embodiment the characterising value 24 of a single frame 10 is expressed as the value of the ratio of the count value 26 to the number of macroblocks 12 in a frame 10 expressed in integer percentage points. In Figure 1 therefore, the characterising value 24 of the frame 10 shown is ten percentage points, as there are eighty macroblocks 12 and the count value 26 is eight. The percentage of the number of I macroblocks 16 encoded to all macroblocks 12 is preferred as the method for determining the characterising value 24 that is returned, as it is less susceptible to changes in the parameter of the stream, such as resolution, though other methods for calculating a characterising value 24 based on the count value 26 may be used. In another embodiment the amount of motion in a single frame 10 may be described by the amount of P macroblocks 14 per frame 10. The characterising value 24 and count value 26 when using the inter-frame P macroblocks 14 may be calculated as described above. Further embodiments of the invention return a characterising value 24 to describe a single frame 10 based on an expression, such as the ratio, comparing the number of macroblocks 12 encoded with any single encoding technique, or combination of encoding techniques, to the number of macroblocks 12 encoded with one different encoding technique or combination of possibly different encoding techniques. For example the sum of the number of S macroblocks 18 and I macroblocks 16 in a frame 10, expressed as a percentage of the total number of macroblocks 12, may be used to determine a characterising value 24

The characterising value 24 for the frame 10 need not be an integer value and for example a decimal, fraction, binary, hexadecimal, alphanumeric value etc may be used. In all of these embodiments the resulting characterising value 24 for each frame 10 will return a value that need not be unique and may be shared by other frames. However, by combining the characterising value 24 for a number of (preferably consecutive) frames the resulting sequence of characterising values 24 will become more distinctive as the number of frames are increased, so that the value 24 for an common video stream containing many frames is very unlikely to be shared by any other unrelated video stream. This sequence is the fingerprint of the stream 34.

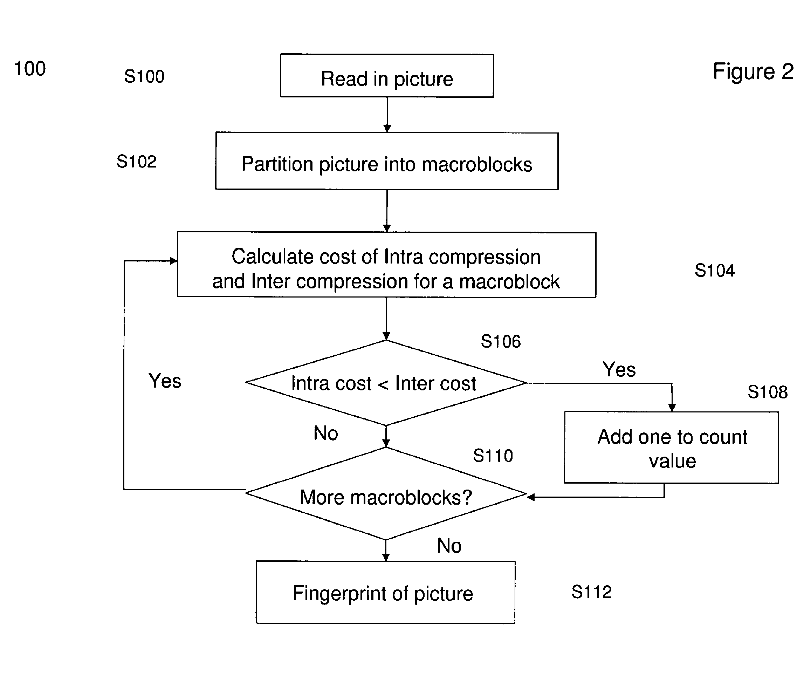

Figure 2 shows the process of characterising an individual frame 10 in a raw or encoded video stream 30 that is not encoded using the preferred encoder and is to be encoded or transcoded to the preferred format. There is shown the process of reading in the frame 10 at step S 100, partitioning of the frame 10 into macroblocks 12 at step S 102, calculating the two costs of encoding a macroblock 12 with Intra and Inter compression at step S104, comparing the said costs of encoding the macroblock 12 at step S106, modifying the count value 26 at step S 108, checking for more macroblocks 12 at step S110 and the final calculation of the characterising value 24 at step S 112.

A video stream 30 comprising one or more frames 10 is read into a computer to be characterised, the computer running a program in accordance with the invention. The program causes the computer processor to read an individual frame 10 at step S100 and in a preferred embodiment sets the count value 26 to zero. The count value 26 is the value that is used to calculate the characterising value 24 for a single frame 10 as described with reference to Figure 1.

Each frame is partitioned into one or more macroblocks 12 at step S102. In a preferred embodiment the macroblock 12 is of a fixed size across the frame 12 of 16 x 16 pixels, though other sized macroblocks 12 particularly those supported by the H.264/AVC standard may be used. The cost for encoding each macroblock 12 either temporally, using known inter-frame encoding methods, or spatially, using known intra-frame encoding techniques is calculated at step S104. In a preferred embodiment the calculation of the cost is based on the amount of compression achieved by a certain technique, however other methods of calculation such as the amount of CPU time required to encode a macroblock 12 may be used. In a preferred embodiment the macroblocks 12 are then encoded, or transcoded, with the technique that provides the best compression as determined by the calculation at step S106. A comparison of the costs, for each technique, is made at step S106. In the preferred embodiment if the cost of encoding a macroblock 12 by intra-frame encoding is less than for inter-frame encoding then the count value 26 increases by one at step S108 and step S110 follows. If the intra-frame encoding is more expensive than the inter-frame encoding the count value 26 remains the same and step S110 follows. This process is repeated for all macroblocks 12, thereby counting all the macroblocks 12 in a frame that are encoded using the intra-frame technique. Alternatively instead of using the cost calculation directly to alter the count value 26 the program simply counts the number of I macroblocks 16 after encoding or transcoding of the frame 10.

When there are macroblocks left at step S110 the process 100 returns to step S 104 but once steps S106 has been performed for all macroblocks in the frame, then step S 110 is followed by step S112. At step S112, the characterising value 24 for the frame 10 is determined using the count value 26 determined from steps S104 to S110. The characterising value 24 is preferably determined by the methods described with reference to Figure 1.

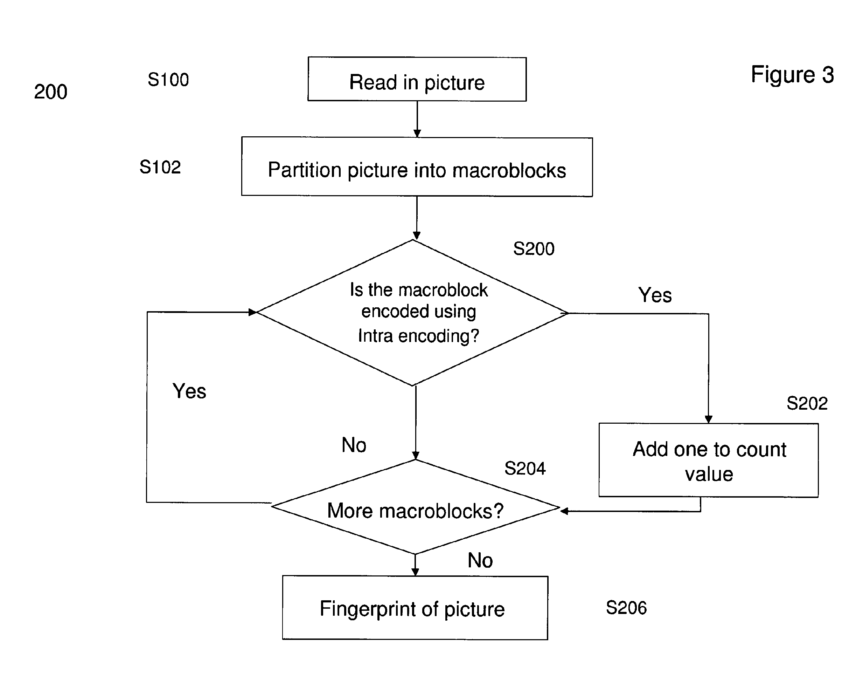

Figure 3 is a flow diagram of the process 200 of characterising a video stream 30 that has already been encoded using the preferred encoder. There is shown the process of reading in the frame at step S100, partitioning of the frame into macroblocks 12 at step S102, checking if the macroblock 12 is encoded using intra-encoding techniques at step S200, modifying the count value 26 at step S202, checking for more macroblocks 12 at step S204 and the final calculation of the characterising value 24 at step S206.

As in Figure 2, the program characterises individual frames and reads in one frame 10 at step S100 and partitions each frame 10 into one or more macroblocks 12 at step S102, preferably the count value 26 at this stage is set to zero. The properties of each macroblock 12 are determined at step S200, and in the preferred embodiment the determination is made by reading the encoding attribute of the macroblock 12 using a suitable program. In a preferred embodiment the characterising value 24 of a single frame 10, is based on the number of existing intra-encoded I macroblocks 16 and accordingly a decision is based on the use of intra-encoding at step S200. If a macroblock 12 is encoded as intra-frame I macroblock 16, then the count value 26 for the frame is modified at step S202 and the process continues to step S204. If the macroblock is encoded as any macroblock other than an I macroblock 16, the process continues at step S204. In a preferred embodiment a value of one is added to the frame's count value 26 for each I macroblock 16, therefore the count value 26 is simply a measure of the number of I macroblocks 16 in a single frame 10. Other methods for determining a characterising value 24 for a frame 10, based on the number of macroblocks 12, encoded in a particular way may also be used.

Once the encoding technique for a macroblock 12 has been determined the program checks for further macroblocks at step S204 and repeats steps S200 until all macroblocks 12 have had their encoding attributes checked, then the process 200 progresses to step S206. The characterising value 24 for each frame 12 is determined at step S206 based on the count value 26 for the frame, preferably determined by the methods described above.

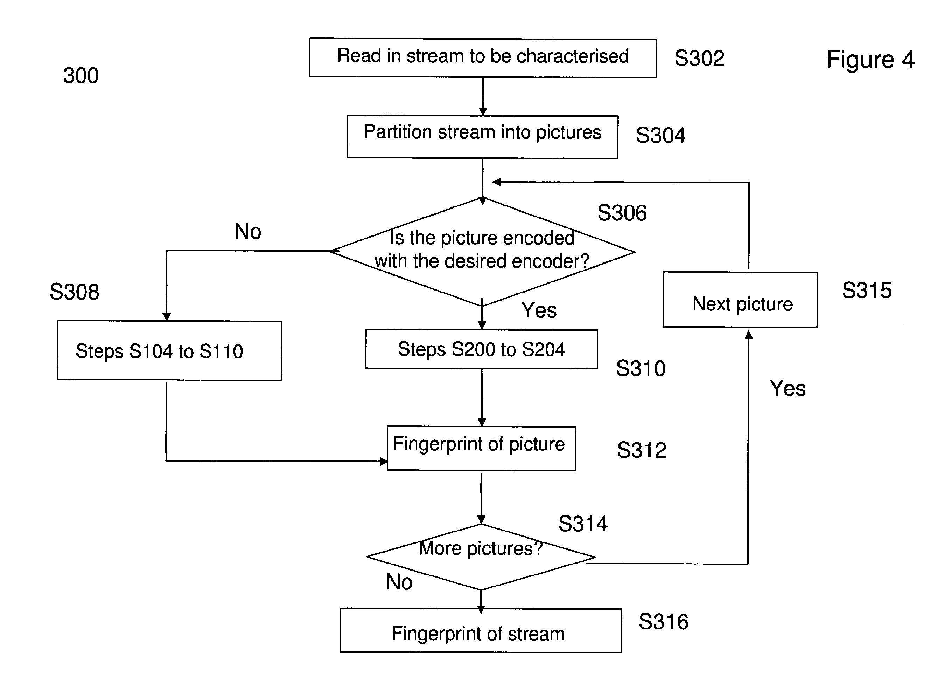

Figure 4 represents the overall process 300 of characterising of any type video stream (raw, encoded in the preferred encoder, or encoded with another encoder). There is shown, the reading of the video stream 30 at step S302, the partitioning of the video stream 30 into single frames 10 at step S304, the determination of the encoding technique used at step S306, the determination of the fingerprint for a single frame 10 at steps S308 and S310, the output of the fingerprint of picture at step S312, the repeating of the process through all frames at step S314 by proceeding to the next picture S315 and the final determination of the fingerprint for the whole characterised stream at step S316.

The video stream 30 to be characterised is read into the program at step S302 and the individual frames that comprise the video stream 30 are extracted at step S304. In the preferred embodiment every frame that forms the video stream 30 is used to characterise the video though other embodiments may use selected pictures or slices of frames.

The encoding technique for a first frame is checked at step S306, using the encoding attributes of the data. If the inputted image is in a raw format or encoded using a different technique to the desired one, the characterising value 24 for that frame 10 is determined at step S308, which incorporates the steps S104 to S112 of process 100 as described above. If the frame is encoded using the desired encoder, in a preferred embodiment one which uses the H.264/AVC standard, the characterising value 24 of the single frame 10 is determined at step S310, which incorporates steps S200 to S206 of process 200. The characterising value for the single frame 10 is returned at step S312 and the process takes the next picture S315 and returns to step S306 to perform the steps on this picture.

Once step S314 determines that all frames 10 that are used to characterise the video stream 30 have been characterised the fingerprint of the stream 34 is determined at step S316. In a preferred embodiment this fingerprint is a sequence of the characterising values 24 for each frame 10. Therefore the length of the fingerprint 34 is proportional to the length of the stream characterised. In other embodiments, other combinations of the individual characterising values 24 for the frames 10 in the video stream 30 may be used to form the fingerprint 34.

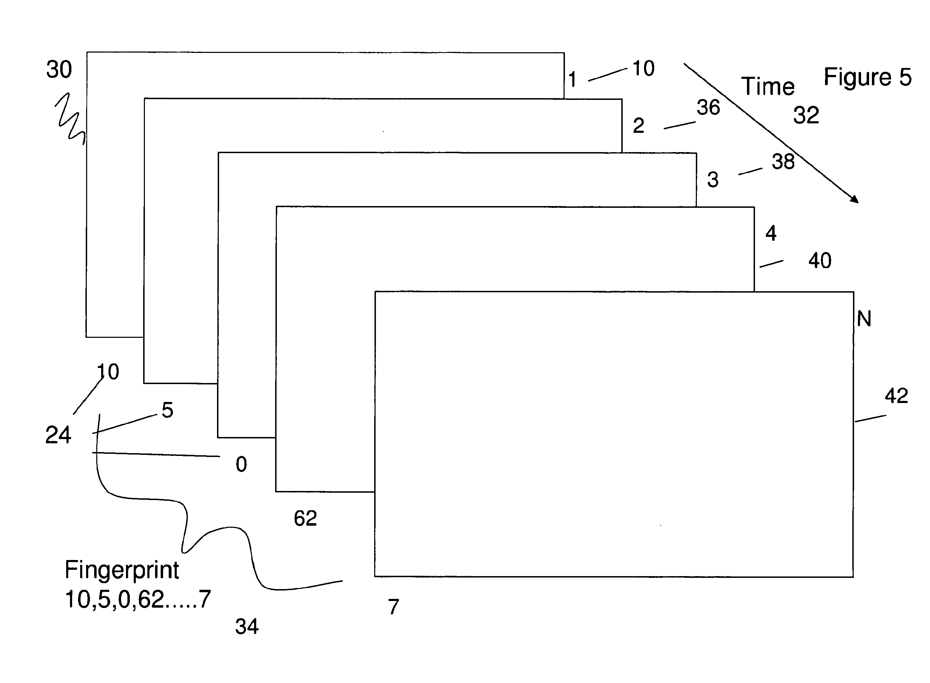

Figure 5 is a representation of the combination of the characterising frame values 24. There is shown a video stream 30, which comprises N number of frames 10, 36, 38, 40, 42, the direction of time 32, the characterising values 24 of each frame and the fingerprint 34 of the video stream 30.

Each frame 10, 36, 38, 40, 42 has already been characterised using one of the processes described above. The frames are consecutive frames in the video stream 30. The stream consists of N number of frames. The first frame 10, has characterising value 24 of 10, the second frame 36, has a characterising value 24 of 5, the third frame 38 has a characterising value 24 of 0, the fourth frame 40 has a characterising value 24 of 62 and the Nth frame 42 has a characterising value 24 of 7. The fingerprint 34 for the video stream 30 is a combination of all the characterising values 24 for each frame 10, 36, 38, 40, 42. In Figure 5 the fingerprint 34 for this sequence of frames is 10, 5, 0, 62, ..., 7. The length of the fingerprint 34 is therefore proportional to the length of the video stream 30. Whilst the characterising value 24, for each frame 10, 36, 38, 40, 42 is not necessarily unique, the combination of the characterising values 24, to describe a video stream 30 becomes rarer with the length N and provided there are sufficient frames 10 to describe the stream 34 the combination of the characterising values 24 produces a fingerprint 34 that is not shared with another stream. In the preferred embodiment each frame 10, 36, 38, 40, 42 that forms the video stream 30 is used but in other embodiments every other frame, or any subsequence thereof may be used. Preferably, once a video stream 30 has been characterised and a fingerprint 34 been calculated the fingerprint 34 is written to some form of writeable memory so that it can be stored for future reference and compared to the fingerprints of previously characterised streams.

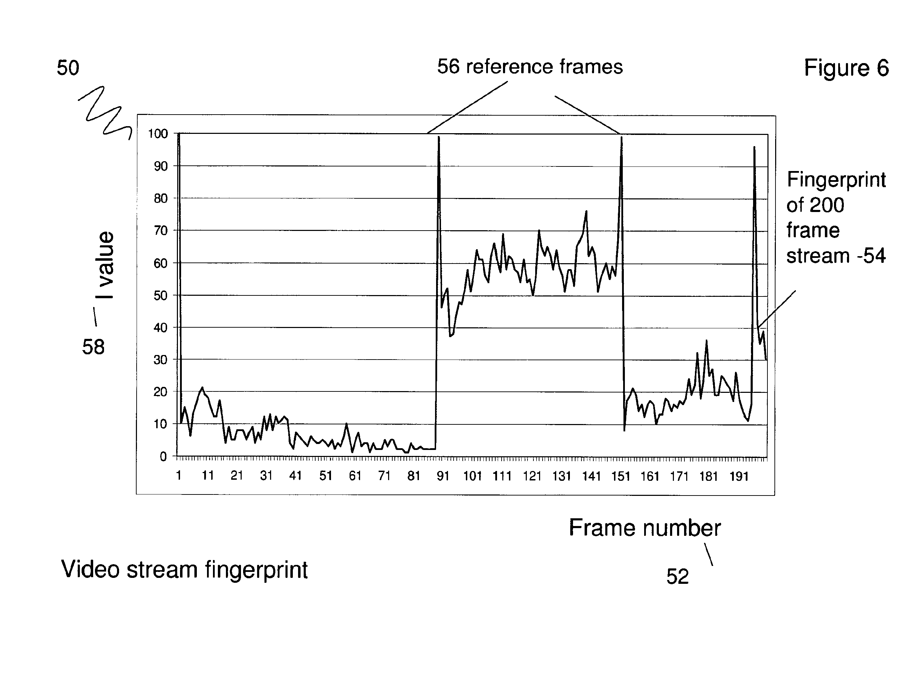

Figure 6 is an example of a plot 50 of characterising values 24 for a two hundred frame video stream 30. There is shown the plot 50, the frame number axis 52, the characterising value axis 58, the plot of the characterising values that form the fingerprint 54 and the reference frames 56. Reference frames 56 have a value of 100, as reference frames are only encoded with reference to themselves and therefore all macroblocks 12 in a reference frame by definition are I macroblocks 16.

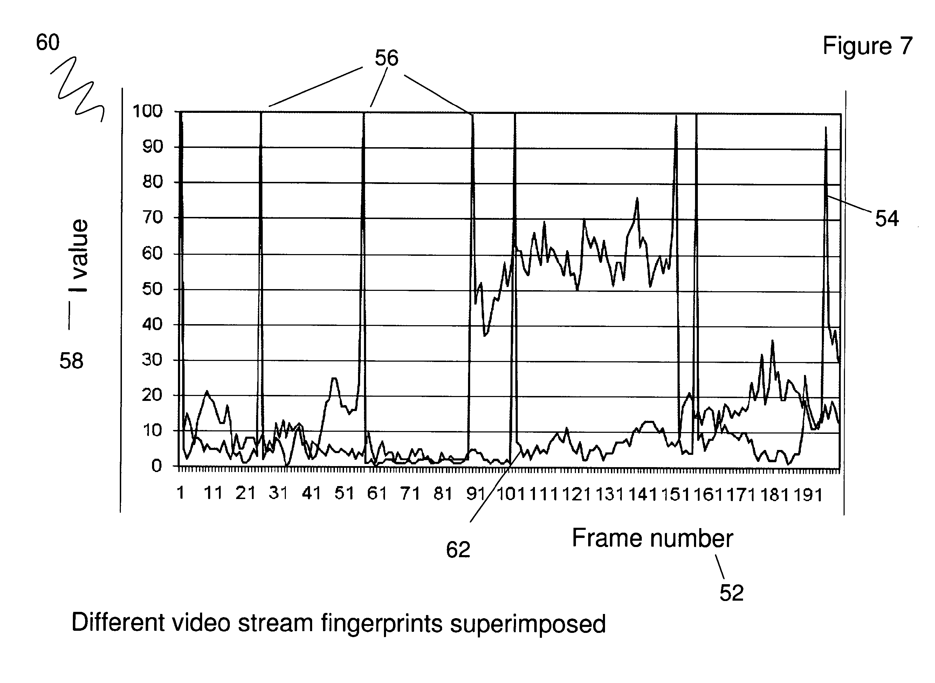

Figure 7 is an example of a plot 60 of characterising values 24 for two different two hundred frame video streams 30. There is shown the plot 60, the frame number axis 52, the characterising value axis 58, the plot of the characterising values that form one fingerprint 54, the plot of the characterising values that form a second fingerprint 62 and the reference frames 56 of both said plots. The two fingerprints plotted 54, 62 are clearly different in shape as well as phase and do not match, indicating that the two streams are different.

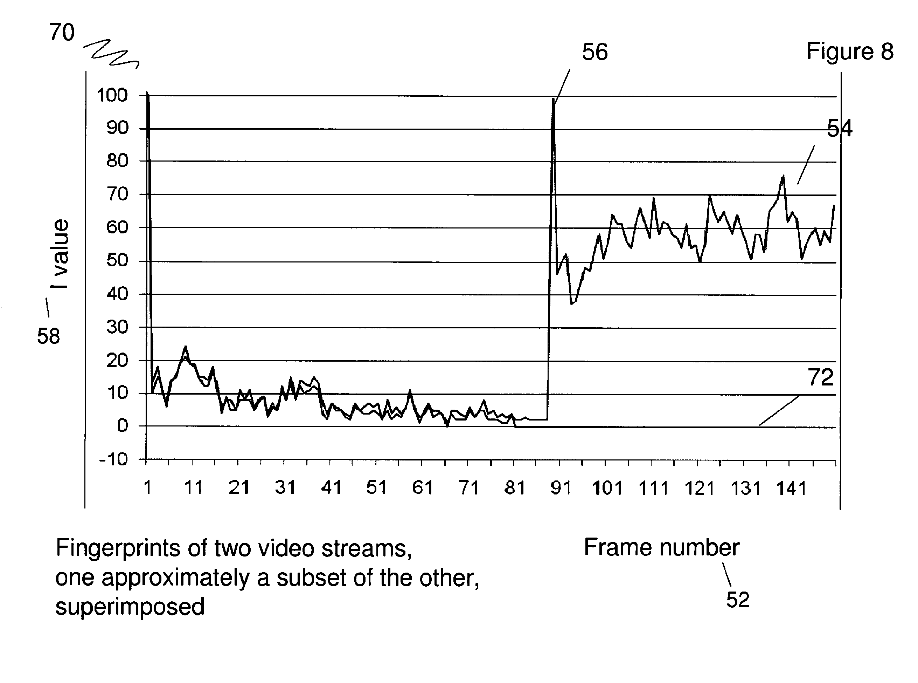

Figure 8 is an example of a plot 70 of characterising values 24 for two video streams 30, though one stream is a subset of the other. There is shown the plot 70, the frame number axis 52, the characterising value axis 58, the plot of the characterising values that form one fingerprint 54 of a video stream 30 which is two hundred frames in length, the plot of the characterising values that form a second fingerprint 72 which is a subset of the first video which has fingerprint 54, has its first frame at the position of the first frame of the first video and is 80 frames in length and the reference frames 56 of both said plots. The two fingerprints 54, 72 are very similar for the first 80 frames. The differences in the fingerprints 34 are due to the difference in the encoding streams, where differences in the resolution and brightness of the video streams 30 have caused minor changes in the fingerprint. The two fingerprints 54, 72 are sufficiently similar even with the different encoding properties of the video streams 30, so that it is possible to match the two streams using conventional matching techniques.

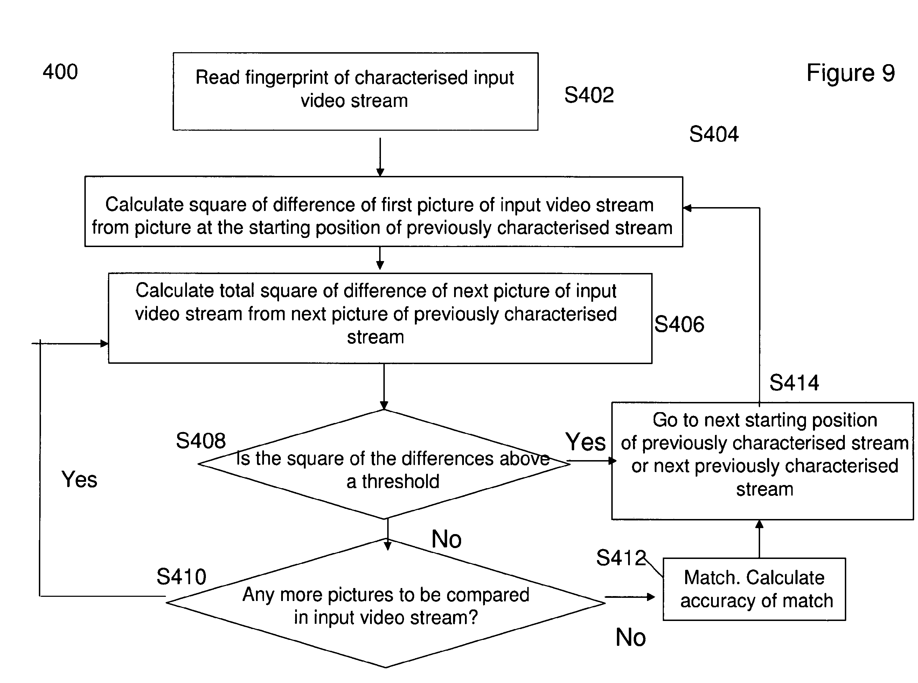

Figure 9 is a flow chart describing the process 400 of matching a fingerprint 34 amongst previously characterised content 400, which are stored, for example in a database. There is shown the steps of reading the fingerprint S402 of the input stream to be matched with a previously characterised stream or to a subset of a previously characterised stream, the steps of determining a match S404, S406, S408, S410 assigning an accuracy of the match at step S412 and looping over all candidate starting positions of all previously characterised streams constituting the known content S414.

Once a fingerprint 34 has been determined for a video stream 30 it is desirable to store the fingerprint 34 so that it may be compared to a database of previously determined fingerprints so that matches may be found. The fingerprint 34 in the preferred embodiment is a sequence of numbers, the length of which is proportional to the length of the video. Each value in the sequence, is a measure of the motion in a particular frame. Known matching algorithms are applied to the fingerprint 34 in order to find a match between the newly characterised content and previously characterised content. In a preferred embodiment a square of the difference technique is used as shown in Figure 9. The first value of the input fingerprint 34 is compared to the value at the first candidate starting position of a previously characterised stream and the difference between the two values is squared at step S404. At step S406 the square of the difference between the second frame of the input video stream 30 and the frame next to the frame at the candidate starting position of the previously characterised content is added to the value previously calculated. This value is compared to a threshold value, which determines how close a match is required before deciding that the input video stream 30 is not a match to a subset of the previously characterised video stream starting at the particular staring position. As the differences between the frames are squared and summed, this sum of squares value rapidly become very large for non-matching videos. Steps S406 and S408 continue with next frames in the input video stream and the previously characterised video stream, until the square of differences value is above a certain predetermined threshold or there are no more frames in the input video stream 30. If the square of the differences is above a predetermined threshold a match has not been found and the program attempts to match the input video stream 30 with a subset of the current previously characterised video stream starting at a next candidate staring position and then, having exhausted all starting positions, to another video previously characterised stream in the database at step S414. If there are no more frames to compare between the input video stream 30 or previously characterised stream and the value is below the threshold level a match is found. The accuracy of the match, based on the size of cumulative squared differences method is calculated at step S412. In the preferred embodiment the accuracy is described as sliding scale between 0 and 10, with 0 being a perfect match and 10 a match with a higher level of uncertainty. It is possible to change the level of the threshold in order to return more or less accurate matches. The skilled person would understand that the technique to match the frames described above is particularly beneficial for the preferred embodiment where the fingerprint 34 comprises a sequence of integer values, where each integer value is the characterising value 24 of single frame 10. In other embodiments the use of the sum of squared differences technique to match an inputted video stream 30 to a known repository may not be applicable.

Because the fingerprint is a sequence of numbers with the order corresponding to the sequential order of the frames, it is easy to search for a previously characterised stream matching a characterised input stream of equal length, for a subset within a previously characterised stream of length equal to the length of an inputted video stream and matching the said inputted stream, as depicted in Figure 9 and described above, or for a subset within a previously characterised stream of length equal to a given subset of an inputted video stream and matching the said inputted video stream subset.. Overlapping sections of video can also be identified by matching the beginning and end of their respective fingerprints, the said overlapping sections being again parts of a sequence.

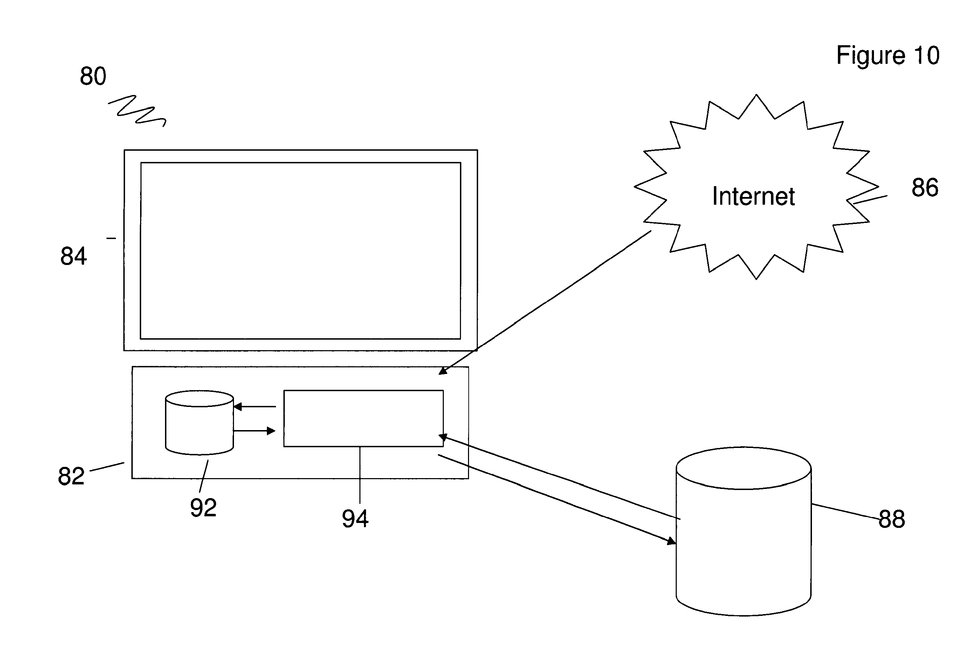

Figure 10 describes an embodiment of the invention, where the inputted video stream 30 is either downloaded or streamed from the internet 86 and searched to see if it contains known adverts (i.e. where the adverts are a subset of the inputted video stream 30). This would allow, for example, a known media player to be able to identify adverts in a stream and skip them or an advertiser to check that their content has been correctly included, or a fee collector to measure the number of times an advert has been downloaded amongst streams.

There is shown a user personal computer 80, including a computer hard drive 82 hosting a program, a form of writeable memory 92, various processors 94, a display device 84, a connection to the internet 86 and an external database 88. In other embodiments, the personal computer 80 may be another form of computer e.g. portable computer, a network of computers etc. The program may also be stored at a location other than the computer 80, for example on a server, on an external computer, the internet etc. The external database 88 contains the fingerprints of the adverts, which have been previously characterised by the method of process 300.

The user may download or stream the video stream 30 from the internet 86, via known means. The video stream 30 in a preferred embodiment is analysed by the processor 94 running a program which is stored on the user's personal computer 80. The video stream 30 is analysed using process 300. The fingerprint 34 of the stream 30 is then preferentially stored on the writeable memory 92 of the computer 80 or an external database 88 which is accessible to multiple users to allow for the fingerprints 34 of characterised streams to be stored on the database. Such an external database 88 may be accessible in a manner analogous to the well known music databases which identify music CDs. Once the fingerprint 34 of the video stream 30 has been determined, it is then matched against fingerprints of previously characterised adverts stored on the external database 88. In this example the characterised stream 30, is a television programme which is longer than the adverts, subsequently the fingerprint 34 for the characterised stream is longer than for the adverts. In such a scenario it is preferential to search for the fingerprint 34 of the advert within the longer television programme fingerprint. Then matching the advert fingerprint to the fingerprint 34 to known content occurs such as by process 300. In a preferred embodiment information regarding the matches, such as position in the stream and length of the match, can be used by a known video player to skip identified adverts. Alternatively, such information may be used to disable the fast forward mechanism of a media player at particular segments of a stream and not allow adverts to be skipped.

A further application of the invention is the use of the program in large video repositories on the internet 86 such as YouTube (RTM) or Dailymotion (RTM). Such repositories allow users to upload content, and the content is often described by the users by tags or other metadata. With popular content several different users may upload the same video meaning that identical content may appear multiple times on the same repository with different but similar names. When a user searches for a video, the search is performed on the user inputted tags and may return many identical videos in the set of results. Consequently it may be difficult to get past a large amount of duplicated content to find other content relating to the search request, especially if it is necessary to play each video in a media player before knowing if it is the same as a previously played video.

The invention is able to identify identical content, either by comparing the fingerprints 34 of the content, if they have been previously characterised or by determining the fingerprints 34 of the content returned by the search such as by process 300, and comparing them as described above. When matching content is found the search may group the matching videos together in an analogous way to known url grouping methods found on internet search engines, such as by grouping all identical content and only giving a hyperlink to the first example in each group but giving the user the option to view all videos in a group if desired.

Furthermore matches of that content which are not identical but contain segments or clips of other results in the results set may be identified and grouped. This can occur even if the clips are edited for the reasons stated below.

Another embodiment of the invention is further concerned with the use of the invention in large video repositories on the internet 86, again such as YouTube (RTM) or Dailymotion (RTM). Some users upload copyrighted material, or make videos that contain segments of copyrighted material, such as compilations of sporting clips for example. The invention is able to quickly search these large repositories for copyrighted material in a way analogous to that of identifying adverts in a video stream 30 as described with reference to Figure 10. Persons searching for copyrighted material would characterise the content they wish to search for with a fingerprint 34 as described above. The fingerprint 34 of the copyrighted material would be compared to the characterised streams in the repository and matches would be found as described above. As the matches are not reliant on tags or metadata which may be incorrect or deliberately misleading, this embodiment would provide a more reliable method of identifying content. Additionally, the embodiment would allow for copyrighted material to be identified amongst non copyrighted material or copyrighted material belonging to other legal persons, which may appear in compilation clips.

A further benefit of the invention is that it returns a fingerprint 34, that is robust to changes in the parameters of the stream such as resolution, colour, size of macroblock 12 etc. Therefore even if the content has been altered or downgraded in quality a match may still be found. Additionally, a match would still be found if a logo, digital watermark etc., has been added to the content. Furthermore, as the invention does not rely on the audio content of a video stream 34 a match may still be found for content with altered, and even entirely different, audio. The methods of fingerprinting a video stream 34 in the prior art do not return match results when a stream has been altered, either by changes of parameters of the stream such as resolution, colour, encoding attributes etc., or the inclusion of digital watermarks or logos. The fingerprint returned by the invention is robust to these changes allowing for the identification of altered content. It can also be used in combination with known audio matching techniques.

Whilst the above embodiments have been described in the context of their application for a single video stream, it would be appreciated that the presented invention may be used in a variety of different applications. The use of such a system may be implemented on a single desktop or portable computer to characterise video clips already stored thereon, or to characterise video streams downloaded or streamed from the internet. Furthermore, the invention may be implemented on a content server which contains video clips that may be accessed via, for example, the internet, a network of computers, etc.

## Claims

1. A method of characterising a video stream comprising one or more pictures, the method comprising the steps of; partitioning a picture in the video stream, to be **characterised**, into a plurality of blocks of data; measuring for one or more blocks of data whether a particular encoding technique has been used to encode the block of data or calculating which of a plurality of distinct encoding techniques is preferred to encode the block of data and storing data dependent on the measurement or calculation in a memory; determining a value for the picture based on the number of blocks of data that have been encoded, or have been calculated to be preferred to be encoded using a particular encoding technique; determining a characterising fingerprint of the video stream based on the one or more values assigned to each picture of the video stream that a value has been determined for.

2. A method of claim 1 where the video stream comprises a plurality of pictures.

3. A method of any preceding claim where the calculation is performed on each picture of the video stream.

4. A method of any preceding claim where the calculation or measurement is performed on each block of data in a picture.

5. A method of any preceding claim where the blocks of data are macroblocks of pixels, preferably macroblocks of regular size supported by video encoding standards.

6. A method of any preceding claim where at least one encoding technique is an inter frame encoding technique and/or at least one encoding technique is an intra-frame encoding technique.

7. A method of any preceding claim where the encoding technique calculated to be preferred to a block of data is the technique that is the least computationally expensive technique to implement or where the encoding technique calculated to be preferred to a block of data is the technique that provides the most compression.

8. A method of any preceding claim comprising the step of using the encoded technique calculated to be preferred to a macroblock to encode said macroblock.

9. A method of any preceding claim where the value of a picture is based on the number of blocks of data that have been encoded, or have been calculated to be preferred to be encoded using a plurality of particular encoding techniques/combination of techniques;

10. A method of any preceding claim where the value of a picture is determined by a comparison of the number of blocks of data that have been encoded, or have been calculated to be preferred to be encoded with a first technique or one of, and preferably a plurality of, technique(s) of a first set of techniques compared to the number of blocks of data encoded, or have been calculated to be preferred to be encoded with at least one other distinct encoding technique or technique not in the first set of techniques.

11. A method of claim 10 where the calculation is the ratio of blocks of data that have been encoded, or have been calculated to be preferred to be encoded with one technique one of, and preferably a plurality of, technique(s) of a first set of techniques to the total number of blocks of data, or to at least one other distinct encoding technique or technique not in the first set of techniques, the ratio preferably expressed in integer percentage points.

12. A method of claim 10 or 11 where the value of a picture is determined by the ratio of the number of intra encoded macroblocks to the total number of macroblocks or to the number of inter encoded macroblocks, preferably expressed in integer percentage points.

13. A method of any preceding claim where the fingerprint to characterise the video stream is determined by a combination of the values of one or more of the individual pictures that form all or part of the video stream, and preferably where portions of the video characterising value based on the individual picture values are in the same consecutive order as the respective pictures.

14. A method of any preceding claim where the fingerprint to characterise the video stream is determined by the characterising values of all consecutive pictures in the video stream, and where preferably the fingerprint is a sequence of numbers the length of which is related to the number of pictures **characterised**.

15. A method of comparing video streams comprising the steps of; characterising a video according to any preceding claim, comparing the characterising fingerprint to one or more fingerprints of precharacterised video streams so that identical and/or similar characterising values are found.

16. A method according to claim 15 where the characterising fingerprints are stored in a database comprising the characterising fingerprints of precharacterised content.

17. A method according to claim 16 where the database is enabled to be queried in order that identical and/or similar characterising fingerprints are recovered.

18. A method according to claim 16 or 17 wherein the precharacterised video streams have been **characterised by** the method of any of claims 1 to 18.

19. A computer system for characterising video streams comprising; one or more computers programmed to characterise a video stream, comprising one or more pictures, the computer or computers adapted to partition individual pictures in a video stream into one or more blocks of data, assign individual pictures in the stream a value based on the encoding properties of the individual blocks of data in said pictures and produce a characterising fingerprint for the stream based on the values of said pictures, and preferably to compare the characterising value of the video stream to previously **characterised** video streams in order to find identical or similar values

20. A computer system of claim 19 comprising a database where the characterising fingerprint and/or values of the video stream is/are preferably stored.

21. A computer system of claim 20 where the database contains the values/fingerprints of previously **characterised** video streams and is enabled to be searched so that identical or similar characterising values are returned.

22. A computer system of claim 21 where the database is held online and enabled so that one or more users may update said database with the characterising fingerprints/values of **characterised** video streams.

23. A computer system of any of claims 19 to 22 further comprising a video stream player where the identical or similar characterising values returned by the database are stored by the video player and one or more computer is programmed to alter attributes of the video player when identified content is played.

24. A computer program product having encoded thereon computer readable instructions which instructions when implemented by a computer system enable a method according to one or more of claims 1 to 28 and/or produce the system of claims 19 to 23.
